**Europäisches Patentamt**

**European Patent Office**

**Office européen des brevets**

(11) Publication number: **0 083 244**
**B1**

(12) **EUROPEAN PATENT SPECIFICATION**

(45) Date of publication of patent specification: **19.08.87**

(51) Int. Cl.⁴: **B 60 B 5/02,** B 29 C 43/02

(21) Application number: **82306982.8**

(22) Date of filing: **30.12.82**

(54) Fibre reinforced synthetic material wheel.

(30) Priority: **28.12.81 US 334674**

(43) Date of publication of application:
**06.07.83 Bulletin 83/27**

(45) Publication of the grant of the patent:
**19.08.87 Bulletin 87/34**

(84) Designated Contracting States:
**DE FR GB**

(56) References cited:
**AT-A- 229 018**
**GB-A-2 045 700**
**US-A-3 183 142**
**US-A-3 509 614**
**US-A-3 917 352**
**US-A-4 177 306**

(73) Proprietor: **FORD MOTOR COMPANY LIMITED**
**Eagle Way**
**Brentwood Essex CM13 3BW (GB)**
(84) **GB**

(73) Proprietor: **FORD-WERKE**
**AKTIENGESELLSCHAFT**
**Ottoplatz 2 Postfach 21 03 69**
**D-5000 Köln 21 (DE)**
(84) **DE**

(73) Proprietor: **FORD FRANCE SOCIETE ANONYME**
**344 Avenue Napoléon Bonaparte B.P. 307**
**F-92506 Rueil Malmaison Cedex (FR)**
(84) **FR**

(72) Inventor: **Daniels, Vernon A.**
**7507 Admiralty**
**Canton Michigan 48187 (US)**
Inventor: **Park, Joonmin**
**34445 Lake Hurst Drive**
**Farmington Hills Michigan 48018 (US)**
Inventor: **Inanyi, Steven**
**502 Wolverine Drive**
**Walled Lake Michigan 48088 (US)**

(74) Representative: **Messulam, Alec Moses et al**
**A. Messulam & Co. 24 Broadway**
**Leigh on Sea Essex SS9 1BN (GB)**

Courier Press, Leamington Spa, England.

## Description

This invention relates to a method of making fibre reinforced synthetic material automotive vehicle road wheels.

Conventionally, wheels such as automotive passenger vehicle road wheels have been made of steel to provide adequate strength and durability. Such wheels must support a proportional share of the weight of the vehicle and must reliably and safely transmit the driving and braking torques between the tyre and the axle hub. Such conventional steel wheels are disadvantaged, however, by their weight. In view of the growing interest in improved fuel economy, it is desirable to reduce as much as possible the weight of all vehicle components, including the wheels.

Other metals, such as, for example, aluminium have been used in place of steel to make vehicle wheels. In view of the greater cost of aluminium as compared with steel, however, aluminium wheels are typically fashioned as so-called styled aluminium wheels which are decorative and can be marketed at prices sufficient to recover the increased cost. It would be desirable, therefore, to produce styled wheels at a cost lower than that possible for aluminium styled wheels.

In the past, there have been efforts to fabricate a vehicle wheel of synthetic material. In U.S. Patent No. 3,369,843, it was suggested that a wheel structure could be formed by building up a plurality of laminations of fibre reinforced synthetic resin materials. This method employed a cup-shaped circular mould for each half of the final wheel structure. Triangular shaped plies of reinforced resin, referred to as "glass fabric cloth", were laid into the mould in overlapping relation around a central locating pin.

In U.S. Patent No. 3,917,352, a filament winding technique is suggested for fabricating a vehicle wheel.

In U.S. Patent No. 3,811,737, a one-piece wheel of reinforced resin material is suggested, characterised in that the periphery of each of a plurality of hub-fastening holes is reinforced by small plates of rigid material embedded in the thickness of the disc or so-called "spider" portion of the wheel.

In U.S. Patent No. 4,072,358 to Ridha a compression moulded cut-fibre reinforced plastic wheel is suggested, wherein the rim, disc and hub portions of the wheel are all uniformly and predominantly axially reinforced by cut glass fibres located in planes parallel to the axis of the wheel.

GB—A—2045700 discloses a two step process for compression moulding a synthetic material vehicle wherein the rim section is first reformed by a compression moulding step, then the mould is opened and a disc charge for the planar spider portion of the wheel is inserted. Finally by a second compression moulding step the wheel is formed in contrast according to the present invention a vehicle wheel is formed in a single compression moulding step. No separate step is required as it is in GB—A—2045700 to compression mould the tubular section to partially form the rim portion prior to the addition of spider portion of the preform.

According to the present invention, there is provided a method of compression moulding at a temperature from 135°C to 165°C at a pressure from 4825 kPa to 10300 kPa for a time from 3 to 6 minutes a fibre reinforced synthetic material automotive vehicle wheel, including a substantially planar spider portion comprising random chopped fibre reinforced resin and a rim portion or tubular section comprising fibre reinforced resin sheet including random chopped fibre and continuous fibre, said tubular section surrounding said spider portion about an axis substantially normal to the plane of said spider portion characterised in that the method comprises first making a compression mouldable pre-form of a synthetic material wheel which pre-form is made by the steps of wrapping a compression mouldable substantially planar spider portion with a first compression mouldable tubular section and wrapping the first tubular section with a second compression mouldable tubular section said second tubular section being substantially coaxial with said first tubular section and extending axially in both directions beyond said first tubular section, and thereafter compression moulding said preform.

In the present invention the second tubular section extends axially in both directions beyond the first tubular section. GB—A—2045700 does not disclose this feature of the present invention. Thus the step of providing a fibre reinforced preform having the second tubular section extending axially in both directions beyond the first-tubular section and a single step compression moulding of the preform yields improved processing efficiency and reduces processing time in the wheel forming process.

The invention will now be described further, by way of example, with reference to the accompanying drawings, in which:

Figure 1 is a plan view of a pre-form of a synthetic material automotive passenger vehicle road wheel according to a preferred embodiment of the invention;

Figure 2 is a cross-sectional view of the preform of Figure 1 taken along line 2—2;

Figure 3 is a somewhat enlarged, partially fragmented, elevational view of the pre-form of Figure 1;

Figure 4 is a cross-sectional view of the preform of Figure 1 as shaped prior to compression moulding according to a preferred embodiment of the method of the invention, and

Figure 5 is a perspective view of a decorative synthetic material automotive passenger vehicle road wheel formed by compression moulding the pre-form illustrated in Figure 1.

As noted above, the compression mouldable pre-form of the invention comprises a spider portion, a first tubular section and a second tubular section. Employing this pre-form, it will be obvious to the skilled of the art in view of the present disclosure that a wheel can be provided for any of a wide variety of applications. According to a preferred embodiment of the invention, an automotive vehicle road wheel is provided which may be used in place of a conventional steel or aluminium wheel.

In general, the fibre reinforced resin of the spider portion can comprise any of several suitable fibres known to the skilled of the art such as, for example, glass roving, graphite fibres, Kevlar (trademark, E. I. duPont de Nemours & Co., Wilmington, Delaware) fibres and like or a mixture of any of them. Where an automotive vehicle road wheel is desired, however, the fibre preferably comprises glass roving in view of its low cost, high strength and commercial availability. A commercial grade of glass roving available from Owens-Corning Fiberglas Corp., Toledo, Ohio under the designation E411 has been found to provide exceptional results.

For an automotive vehicle road wheel the fibre reinforced resin of the spider portion is preferably high strength sheet moulding compound, known also as HSMC. Such sheet moulding compound comprises random chopped fibre, i.e. the reinforcing fibre is randomly oriented and is provided in lengths of about from 1 cm to 5 cm. The fibre, preferably chopped glass roving, is usually from 40% to 55%, preferably 50% by weight of the sheet moulding compound. The spider portion can be fashioned of a single piece of sheet moulding compound or, more preferably, of a multitude of layers of sheet moulding compound which, in total, provide a thickness sufficient to give the spider portion the necessary strength and durability for its intended use. Thus, for example, in fabricating an automotive passenger vehicle road wheel, approximately 2 to 15 layers of such sheet moulding compound, each about from .25 cm to 1.9 cm thick, can be used in making the spider portion of the wheel pre-form. Thus, for example, square sections of sheet moulding compound, approximately 20 cm × 20 cm, can be stacked, with corners either aligned or alternatingly offset by 45°, depending in part on the desired size of the spider portion. While square sections are generally preferred since they can be cut from sheet moulding compound stock with little or no waste, other, for example round, sections of sheet moulding compound are also suitable.

Suitable resins are commercially available and well known to the skilled of the art. These include, for example, polyester resins, epoxy resins and vinyl ester resins. For automotive passenger vehicle road wheels and other applications calling for high strength and impact resistance and minimum wheel weight, vinyl ester resins are most preferred. More specifically, vinyl ester resins have been found to provide excellent strength, both impact strength and sheer strength. In addition, the vinyl ester resins have been found to provide excellent high temperature performance, that is, they experience less so called "creep".

Creep is the deformation of the fibre reinforced resin over time, particularly at elevated temperatures and under such pressure as occurs, for example, at the points of attachment of the wheel to the axle hub. Thus, for example, resin material can creep out from under lug nuts holding the wheel to the hub. The result would be loosening of the attachment of the wheel to the axle hub. Vinyl ester resins have been found to be particularly resistant to such creep. Especially preferred is a proprietary vinyl ester resin composition available from Dow Chemical Company, Midland, Michigan under the designation Derakane 790. This vinyl ester resin composition is known to contain t-butylperbenzoate catalyst. Other suitable vinyl ester resins are well known to the skilled of the art.

The resin can comprise additional ingredients known to the skilled of the art, for example, flow control agents, pigments, pigment dispersants, fillers, catalysts and the like.

The size of the spider portion is selected to render the appropriate diameter for the desired wheel. In addition it must have sufficient thickness to provide the strength and durability necessary for its intended use. Thus, for example, an automotive passenger vehicle road wheel typically must pass a so-called Rim Roll test, which tests the durability of the wheel under loads similar to those encountered in street driving, and a so-called Rotary Fatigue Test which is designed to test the strength of the wheel under loads similar to those encountered by an automotive vehicle wheel travelling around a corner. Results of such testing far in excess of that required for comparable steel wheels have been achieved for automotive passenger vehicle 33 cm road wheel made by compression moulding a pre-form according to the present invention wherein the spider portion was fashioned of approximately 2 Kg sheet moulding compound, 9 layers of 20 cm square, 0.32 cm thick HSMC consisting of 50% by weight Derakane 790 vinyl ester resin and 50% by weight random chopped (2.5 cm long) Owens-Corning fibreglas E411 glass roving. The sheet moulding compound squares where stacked so as to be alternatingly offset by 45°. For a like wheel of 35.5 cm, approximately 3 kg of the same sheet moulding compound (13 layers, each .32 cm thick) provide test results far in excess of that required of comparable steel wheels. For a like wheel of 38 cm diameter, approximately 3 Kg of the same sheet moulding compound (16 layers, each .32 cm thick) provide test results far in excess of that required of comparable steel wheels.

It will be recognised by the skilled of the art that the desired thickness for the spider portion can be achieved equally well using more or less layers of sheet moulding compound of lesser or greater thickness, respectively. It is desirable, however, that the sheet moulding compound be distributed sufficiently uniformly over the spider portion to flow into all mould cavity areas during compression moulding of the pre-form.

A first tubular section surrounds the spider portion about an axis substantially normal to the plane of the spider portion. The spider portion can be axially centered within the first tubular section or can be axially offset from center. A second tubular section surrounds and is coaxial with the first tubular section. In a pre-form for an automotive vehicle road wheel and like applications, the second tubular section be wider than the first tubular section, that is, that it extend axially above and below the first tubular section. The first and second tubular sections are preferably, but not necessarily, comprised of the same material. Both are comprised of fibre reinforced resin sheet, wherein the fibre content is preferably a mixture of random chopped fibre as described above, and continuous fibre. The continuous fibre can be the same material as that used for the chopped random fibre. Alternatively, different fibres can be used, including any of those mentioned above as being suitable for use in the spider portion. For automotive passenger vehicle road wheels and other applications calling for high strength and impact resistance and minimum wheel weight, glass roving is preferred and glass roving K15 (trademark, PPG Industries, Inc., Pittsburgh, Pennsylvania) is most preferred. The continuous fibre and the random chopped fibre are used preferably in a ratio of about from 4:1 to 1:1, most preferably in a ratio of about 2:1, respectively. Where glass roving is used, the fibre reinforced resin sheet preferably comprises about from 55% to 72% glass by weight, most preferably about 65% glass by weight. In this regard it has been discovered that fibre reinforced resin sheet comprising such combination of chopped random glass fibre and continuous glass fibre provides exceptional and unexpected performance characteristics, particularly both impact strength and shear strength in all directions. In particular, it has been found to be most suitable, per unit weight, for use in automotive passenger vehicle road wheels in place of conventional steel or aluminium wheels. Other materials within the scope of the invention are suitable, however, for less demanding applications and/or if a greater weight of material is used to form the wheel.

While, in general, the necessary thickness of the fibre reinforced resin used in each section of the wheel pre-form is dictated by the degree of strength and durability desired in the finished wheel, and by wheel design, the thickness of the first and second tubular sections required to provide a wheel of any given degree of strength and durability (and, therefore, the overall weight and cost of the wheel) is significantly reduced according to a preferred configuration for the fibre reinforced resin sheet used in those sections.

According to this aspect of the invention, the sheet is comprised of alternating sub-layers of fibre reinforced resin. More specifically, each of a first set of one or more sub-layers comprises random chopped fibre reinforced resin. Each of a second set of one or more sub-layers comprises continuous fibre reinforced resin. The random chopped fibres can be as described above for the spider portion of the pre-form. Preferably, glass fibres of about from 1.25 cm to 5 cm length, more preferably about 2.5 cm, are used with resin in sub-layers of about from 0.038 cm to 0.05 cm thick, preferably about 0.043 cm thick. The continuous fibres are continuous in the sense that substantially all extend the length or width of the fibre reinforced sheet used to form the tubular section. Most preferably the continuous fibres are woven at a winding angle of about from 65° to 85°, preferably about 80°. That is, within each such sub-layer comprising continuous fibres, in a first set the continuous fibres extend substantially parallel to each other and in a second set the continuous fibres extend substantially parallel to each other and the fibres in the first set intersect those in the second set at an acute angle of about from 10° to 50°, preferably about 20°. The continuous fibre reinforced resin sub-layers are each preferably about from 0.038 cm to .05 cm thick, more preferably about .043 cm thick.

Suitably, the above described preferred fibre reinforced resin sheet can comprise from one to many sub-layers each of continuous fibre reinforced resin and of random chopped fibre reinforced resin. The number of sub-layers will depend, in part, on the materials employed, on the thickness of the sub-layers and on the strength and durability desired in the finished wheel. For a pre-form of an automotive passenger vehicle road wheel employing preferred materials and configuration, as described above, it has been found to be suitable, as further described below, to employ fibre reinforced resin sheet comprising about from 4 to 13 sub-layers, each of about from .038 cm to .05 cm thick. Fibre reinforced resin sheet according to the preferred embodiment just described is available from PPG Industries, Inc., Pittsburgh, Pennsylvania under the trade designation "XMC".

According to a most preferred embodiment for an automotive passenger vehicle road wheel, the fibre reinforced resin sheet employed in the first tubular section and that employed in the second tubular section are so oriented that the continuous fibres of one are approximately perpendicular to those of the other. Employing fibre reinforced resin sheet wherein the continuous fibres used in the sheet are woven, as in the preferred embodiment described above (wherein a first set of approximately parallel fibres intersects a second set of approximately parallel fibres at an acute angle of about from 10° to 50°, for example, XMC (trademark, PPG Industries, Inc., Pittsburgh, Pennsylvania) or a like product), the fibre reinforced resin sheet of the first tubular section is most preferably so oriented that the continuous fibres thereof extend approximately circumferentially within the tubular section. In the second tubular section, which surrounds the spider portion and the first tubular section, the fibre reinforced resin sheet is so oriented that the continuous fibres thereof are approximately parallel to the axis of the wheel pre-form. Thus, the continuous fibres of the second tubular section extend approximately perpendicular to those of the first tubular section. More accurately, a line bisecting the acute angle of intersection of the two sets of continuous fibres in each of the continuous fibre-reinforced sub-layers of the second tubular section is approximately perpendicular to a line bisecting the acute angle of intersection of the two sets of continuous fibres in each of the continuous fibre-reinforced sub-layers of the first tubular section.

While the thickness of the fibre reinforced resin sheet used in the first and in the second tubular section will be dictated by the desired size of the finished wheel and by the degree of strength and durability desired for the finished wheel, fibre reinforced resin sheet comprising the above described preferred materials has been discovered to provide far greater strength and durability per unit weight of fibre reinforced resin sheet than other known fibre reinforced resin materials. Accordingly, for example, a 33 cm automotive passenger vehicle road wheel, having strength and durability exceeding that required of conventional steel wheels, can be made using a first tubular section comprising two layers of 0.38 cm thick XMC (trademark, PPG Industries, Inc., Pittsburgh, Pennsylvania) or a similar fibre reinforced resin sheet product, approximately 7.5 cm to 15 cm wide. The second tubular section comprises a single layer (but preferably with some overlap) of the same material, approximately 10 cm to 20 cm wide. According to this embodiment, a wheel pre-form for such a 33 cm wheel would comprise, in total, as little as approximately 4 kg of fibre reinforced resin, of which the two tubular sections comprise only approximately 2 kg of XMC (trademark) or like resin sheet product. Similarly, a 35.5 cm wheel would comprise as little as approximately 5.9 kg, of which one half would be in the two tubular sections, and a 38 cm wheel could comprise as little as approximately 6.4 kg of fibre reinforced resin.

For an automotive passenger vehicle road wheel according to the preferred embodiment, the fibre reinforced resin is divided between the spider portion and the two tubular sections in a ratio of about from .9:1 to 1.1:1, respectively. Pre-forms comprising fibre reinforced resin materials other than sheet moulding compound in the spider section and XMC (trademark, PPG Industries, Inc., Pittsburgh, Pennsylvania) or the like in the two tubular sections have been found to require far greater thickness and weight of material to provide wheels of equivalent strength and durability. Such heavier wheels would, obviously, provide less fuel economy and less cost advantage.

According to a method aspect of the present invention, the fibre reinforced synthetic material vehicle road wheels described above can be made, in view of the present disclosure, using compression moulding techniques well known to the skilled of the art. More specifically, a wheel pre-form as described above can be moulded in a compression moulding tool designed to provide the desired configuration for the finished wheel. The wheel can be moulded in a pre-heated mould by applying suitable moulding pressure for an appropriate moulding cycle. Typically, the moulding pressure for a wheel pre-form comprising the preferred material as described above will range between about 4800 kPa and 10300 kPa. Generally preferred is about 6894 kPa (1000 psi). The mould temperature for the preferred material as described above will range between about 135°C and 165°C. Generally, about 150°C is preferred. The moulding cycle time is dependent on moulding temperature, the materials employed in the pre-form, and the thickness of the various sections in the pre-form. Generally, a higher mould temperature and/or a longer cycle time will be required for thicker sections. Obviously, however, the temperature must be appropriate for the materials employed in the pre-form. Thus, for example, mould temperatures below about 175°C should be used for vinyl ester resins, since they have a tendency to pre-gel above that temperature. Typically, the moulding cycle time will be from about 3 to 6 minutes. In the compression moulding of a 33 cm automotive passenger vehicle road wheel employing the preferred materials and amounts of materials described above, for example, a mould temperature of 150°C and pressure of 6894 kPa has been found suitable to produce a finished wheel within 4 minutes moulding cycle time. In any event, it will be apparent to the skilled of the art that the compression moulding time, temperature and pressure should be selected such that the resin is afforded an opportunity to fill all areas of the mould cavity, especially the rim area. The finished wheel is yet another aspect of the present invention.

According to a preferred embodiment of the method aspect of the invention, prior to insertion into the compression moulding tool, the wheel pre-form is pressed so as to give it a concave arc along the axis of the pre-form around the entire circumference of the pre-form. This can be accomplished easily while the resin of the fibre reinforced resin material is fresh and malleable. The advantages provided by this additional processing step include proper pre-form fit and configuration in the mould cavity.

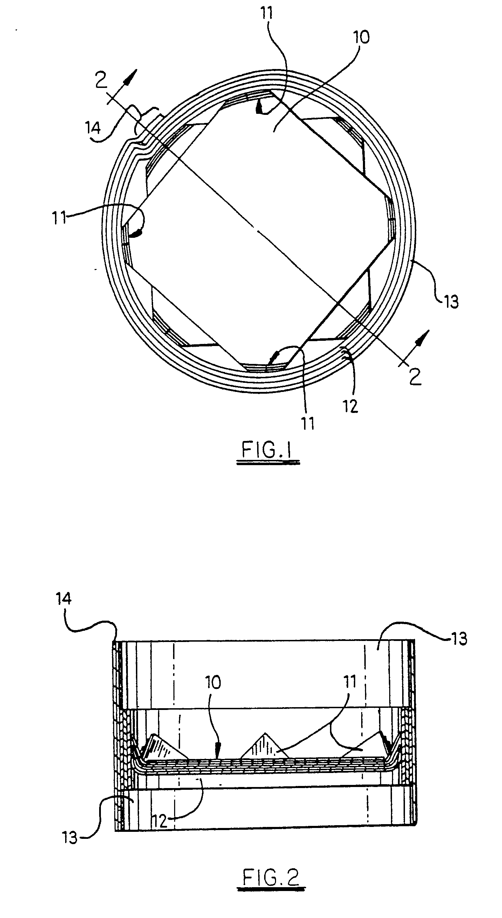

Referring now to the drawings, Figure 1 illustrates an automotive passenger vehicle road wheel pre-form according to a preferred embodiment of the invention. The wheel is viewed along an axis normal to the essentially planar spider portion 10. The spider portion is formed of square pieces of sheet moulding compound stacked one on top of another such that the corners of each are offset by 45° from those of the piece immediately above and below it. The corner portions 11 are bent upwardly such that the spider portion has a somewhat rounded periphery. The upturned corner portions are in contact with first tubular section 12. The first tubular section comprises several layers of fibre reinforced resin sheet, wherein the fibre is a mixture of random chopped glass roving and continuous glass roving. Surrounding and concentric with the first tubular section is a second tubular section 13. The second tubular section comprises a single layer, but for an overlapping portion 14, of the same fibre reinforced resin sheet used for the first tubular section. Figure 2 presents a cross-sectional view of the pre-form of Figure 1, taken along line 2—2 in Figure 1.

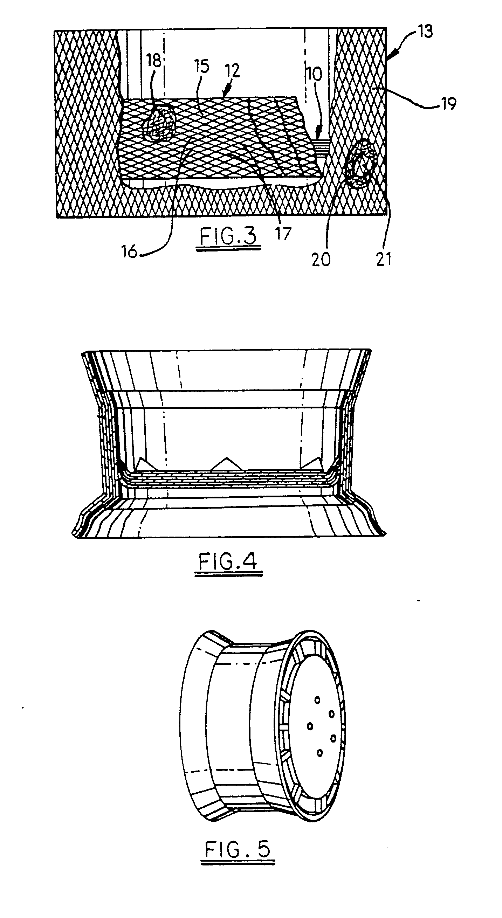

Figure 3 is an elevational view, partially fragmented, of the pre-form of Figure 1. This illustration is somewhat enlarged to show more clearly the configuration of the preferred fibre reinforced resin sheet used in the first tubular section and second tubular section. The outer surface 15 of the first tubular section 12 shows the outermost of multiple sub-layers. Therein in each of a first and a second set of continuous fibres 16, the fibres are substantially parallel to each other and the two sets of fibres intersect one another at an acute angle of approximately 20°. (Thus, such continuous fibres are woven at a winding angle of about 80°, i.e., 90° less one half the acute angle.) As shown by the cut-away on the surface of the first tubular section, the fibre reinforced resin sublayer 18 adjacently underlying the outermost sublayer, comprises chopped random fibre. The fibre reinforced resin sheet employed in the first tubular section consists of multiple additional sublayers (not shown) of such continuous fibre reinforced resin alternating with sub-layers of random chopped fibre reinforced resin.

Similarly, the outer surface 19 of the second tubular section 13 consists of fibre reinforced resin wherein the fibres are continuous fibres and are woven at a winding angle of about 80°. As shown by the cut-away, a sub-layer, 20, of random chopped fibre reinforced resin underlies that outermost sub-layer of continuous fibre reinforced resin. Cut-away 21 within sub-layer 20 reveals the alternating nature of the sub-layers forming the fibre reinforced resin sheet employed in the tubular sections of the pre-form. That is, it reveals that under the sub-layer of random chopped fibres revealed by the cut-away in outermost sub-layer 20 is an adjacent sub-layer of continuous fibre reinforced resin of materials and orientation substantially the same as outermost sub-layer 20. Additional sub-layers of fibre reinforced resin (not shown) underlie the sub-layers exposed by the cut-aways wherein random chopped fibre reinforced resin sub-layers alternate with continuous fibre reinforced resin sub-layers.

Figure 4 is a cross-sectional view of a pre-form according to a preferred embodiment of the invention, which pre-form has been pressed to give it a concave arc along the axis of the wheel. The pre-form of Figure 4 can next be compression moulded to form a synthetic material automotive passenger vehicle road wheel according to the invention. Figure 5 illustrates such a compression moulded road wheel. It will be recognized that the decorative relief provided on the surface of the spider portion is aesthetic in nature and can be altered or deleted as desired.

### Example I

A 33.0 cm size, decoratively styled, synthetic material automotive passenger vehicle road wheel according to the invention was made according to the following procedure. Eleven pieces of 20 cm square .32 cm thick sheet moulding compound were stacked to form a spider portion weighing approximately 2 kg. The sheet moulding compound consisted approximately of 50% by weight random, chopped (2.5 cm length) E411 (trademark, Owens-Corning fibreglas Corp., Toledo, Ohio) glass roving in Derakane 790 (trademark, Dow Chemical Company, Midland, Michigan) vinyl ester resin. Each piece was off-set by 45° from adjacent pieces and the corners were bent upwardly. The spider portion was wrapped with a first tubular section, 12.5 cm in height (approximately 10 cm above and 2.5 cm below the plane of the spider portion), consisting of three layers of 0.38 cm thick XMC (trademark, PPG Industries, Inc., Pittsburgh, Pennsylvania) fibre reinforced resin sheet. The fibre reinforced resin sheet consisted of two sets of alternating sub-layers. Each sub-layer of the first set of sublayers consisted of continuous glass roving reinforced resin, woven at a winding angle of 80°. Each sub-layer of the second set of sub-layers consisted of random, chopped glass roving reinforced resin. The sheet was oriented such that the continuous glass roving ran substantially circumferentially within the tubular section. A second tubular section consisted of a single layer (but for 17.75 cm overlap), 20 cm high, wrapped concentrically around the first tubular section. It consisted of the same XMC (trademark, PPG Industries, Inc., Pittsburgh, Pennsylvania) fibre reinforced resin sheet used in the first tubular section. The second tubular section extended axially beyond the first tubular section approximately 3.8 cm below and 3.8 cm above the first tubular section. It was so oriented that the continuous glass roving thereof ran substantially parallel to the axis of the tubular section. Together, the first and second tubular sections weighed 2 kg. The pre-form so made was compression moulded under a force of 1500 kN in a mould heated to about 150°C for four minutes. The moulded wheel was removed from the mould and allowed to cool.

### Example II

The synthetic material road wheel of Example I was tested for strength and durability according to the following procedures and tested for defects according to the definitions given below, which test procedures and failure definitions are the same as those which have been used for conventional sheet and styled aluminium automotive passenger vehicle road wheels.

A. Rotary Fatigue Test

The wheel was mounted on a typical rotary fatigue test fixture well known to the skilled of the art. The wheel nut torque was set to 115.25 ± 6.75 Nm. A test load of 550 kg was applied and the wheel was run under that test load for 50,000 cycles at 300 rpm. After 50,000 cycles the test load was removed and the wheel was checked for failure in any of the following modes:

a. A change in the mean runout of the loading arm greater than or equal to 0.15 cm measured normal to the axis of rotation.

b. Any crack or fracture which can be detected by dye penetrant inspection using magnaflux spotcheck or equivalent method known to the skilled of the art.

c. Wheel lug nut torque below 67.75 Nm for any nut when measured in the tightening direction.

*Intermediate Test Results:* The wheel showed no failure in any of the defined modes following said 50,000 cycles.

The lug nut torque was reset to 115 Nm, the test load was reapplied and the test was continued to 100,000 cycles. The wheel was again checked for failure(s) as defined above.

*Final Test Results:* The wheel again showed no failure in any of the defined modes.

B. Rim Rolling Fatigue Test

A treadless, tubeless radial test tyre was mounted on the wheel. The tyre was inflated to a cold inflation pressure of 450 kPa ± 35 kPa. The wheel with tyre was then mounted on a typical rim rolling test fixture such as are well known to the skilled of the art. Wheel nut torque was set to 115 Nm minimum. A test load of 1,042 kg was applied and the wheel was run under that test load at a constant 300 RPM for 750,000 cycles. After 750,000 cycles the test load was removed and the wheel was inspected for failure in any of the following modes:

a. Loss of air pressure during testing to below 3.5 Kg/sq. cm which can be traced to a crack in the rim as described in (b).

b. Any crack in the rim detected by dye penetrant inspection using magnaflux spotcheck or equivalent method known to the skilled of the art.

*Intermediate Test Results:* The wheel showed no failure in either of the defined modes.

The test load was reapplied and the test was continued to 2,000,000 cycles. The wheel was again checked for failure in either of the defined modes.

*Final Test Results:* The wheel again showed no failure in any of the defined modes.

C. Additional Testing

Several 33.0 cm size decoratively styled passenger vehicle road wheels, produced as described above, were tested to 4,000,000 cycles of rim roll fatigue as described in part B, 400,000 cycles of rotary fatigue as described in part A, 1500 cycles of grist mill testing according to methods well known to the skilled of the art, and 450,000 miles (724000 km) total accumulated vehicle test on three vehicles, all without any failure in any mode defined above.

Example III

A 35.5 cm size decoratively styled synthetic material automotive passenger vehicle road wheel was made according to the procedure of Example I, with the following modifications. The spider portion consisted of 12 sheets of 24 cm by 24 cm squares of the sheet moulding compound. The first tubular section consisted of two layers of 12.5 cm wide XMC (trademark, PPG Industries, Inc., Pittsburgh, Pennsylvania) and the second tubular section consisted of one layer (but for 20 cm of overlap) of 8 wide XMC (trademark, PPC Company, Pittsburgh, Pennsylvania). Three kilograms of sheet moulding compound were used to form the spider portion and an equal amount was used to form the two tubular sections. The preform was compression moulded at the same pressure and temperature and for the same length of time as was the 33 cm wheel pre-form in Example I. The compression moulded wheel was removed from the mould and allowed to cool.

Example IV

The synthetic material road wheel of Example III was tested for strength and durability according to the procedures of Example II.

A. Rotary Fatigue Test Results

The wheel showed no failure in any of the defined modes at either the intermediate or final testing.

B. Rim Rolling Fatigue Test Results

The wheel showed no failure in either of the defined modes at either the intermediate or final testing.

C. Additional Testing

Several 35.5 cm size decoratively styled passenger vehicle road wheels, produced as described in Example III, were subjected to 20,000,000 cycles of rim roll fatigue testing as described in Example II B, 200,000 cycles of rotary fatigue testing as described in Example II A, 1500 cycles of grist mill testing according to methods well known to the skilled of the art, and 400,000 miles (644000 km) total accumulated vehicle test on fifteen vehicles, all without any failure in any mode defined above.

**Claims**

1. A method of compression moulding at a temperature from 135°C to 165°C at a pressure from 4825 k Pa to 10300 k Pa for a time from 3 to 6 minutes a fibre reinforced synthetic material automative vehicle wheel, including a substantially planar spider portion (10) comprising random chopped fibre reinforced resin and a rim portion or tubular section (12, 13) comprising fibre reinforced resin sheet including random chopped fibre and continuous fibre, said tubular section (12, 13) surrounding said spider portion about an axis substantially normal to the plane of said spider portion (10) characterised in that the method comprises first making a compression mouldable pre-form of a synthetic material wheel which pre-form is made by the steps of wrapping a compression mouldable substantially planar spider portion (10) with a first compression mouldable tubular section (12) and wrapping the first tubular section with a second compression mouldable tubular section (13), said second tubular section being substantially coaxial with said first tubular section and extending axially in both directions beyond said first tubular section, and thereafter compression moulding said preform.

2. A method as claimed in Claim 1, wherein the resin of said spider portion, of said first tubular section and of said second tubular section each consists essentially of vinyl ester resin.

3. A method as claimed in Claim 1, wherein said spider portion comprises sheet moulding compound.

4. A method as claimed in Claim 1, 2 or 3 wherein substantially all of said random, chopped fibre of said spider portion is from 1.25 cm to 5 cm in length.

5. A method as claimed in Claim 1, wherein substantially all of said random, chopped fibre of said reinforced resin sheet is from 1.25 to 5 cm in length.

6. A method as claimed in any one of the preceding claims wherein said continuous fibre and said random, chopped fibre are present in said fibre reinforced resin sheet in a weight ratio from 1:1 to 4:1, respectively.

7. A method as claimed in any one of the preceding claims wherein the fibre of said spider portion comprises glass roving.

8. A method as claimed in any one of Claims 1 to 6, wherein said random, chopped fibre reinforced resin of said spider portion comprises 25% to 55% by weight glass roving.

9. A method as claimed in any one of the preceding claims, wherein the continuous fibre of said fibre reinforced resin sheet comprises glass roving.

10. A method as claimed in any one of Claims 1 to 8, wherein said fibre reinforced resin sheet comprises from 55% to 72% by weight glass roving.

11. A method as claimed in any one of the preceding claims wherein said fibre reinforced resin sheet of each of said first and second tubular sections comprises alternating sub-layers of fibre reinforced resin, wherein each of a first set of one or more sub-layers comprises random chopped fibre reinforced resin and each of a second set of one or more sub-layers comprises continuous fibre reinforced resin.

12. A method as claimed in Claim 11, wherein substantially all of the random chopped fibre of said first set of sub-layers are between 1.25 to 5 cm in length.

13. A method as claimed in Claims 11 or 12, wherein the continuous fibres within a sub-layer comprise a first set of continuous fibres substantially parallel to each other and a second set of continuous fibres substantially parallel to each other, said first set of fibres intersecting said second set of fibres at an acute angle of from 10° to 50°.

14. A method as claimed in Claim 11, 12 or 13, wherein said fibre reinforced resin sheet employed in said first tubular section and said fibre reinforced resin sheet employed in said second tubular section are so oriented in the pre-form that the continuous fibres of the first are substantially perpendicular to the continuous fibres of the second.

15. A method as claimed in any one of the preceding claims wherein said spider portion is axially off-set from the centre of said first tubular section.

**Patentansprüche**

1. Eine Methode, um bei einer Temperatur von 135°C bis 165°C und einem Druck von 4.825 kPa bis 10.300 kPa während einer Zeitdauer von 3 bis 6 Minuten durch Formpressen aus faserverstärktem synthetischen Material ein Fahrzeugrad herzustellen, das einen im wesentlichen ebenen Sternabschnitt (10) aus mit unregelmäßig angeordneten Schnittfasern verstärktem Harz und einen Felgenabschnitt oder Schlauchabschnitt (12, 13), aus faserverstärkten Harzplatten mit unregelmäßig angeordneten Fasern und Endlosfasern umfaßt, wobei der genannte Schlauchabschnitt (12, 13) den genannten Sternabschnitt in einer solchen Anordnung umgibt, daß seine Achse im wesentlichen senkrecht zur Ebene des genannten Sternabschnitts (10) verläuft, dadurch gekennzeichnet, daß die Methode zunächst die Herstellung eines formpreßfähigen Vorformlings für ein Rad aus synthetischem Material umfaßt, wobei dieser Vorformling dadurch hergestellt wird, daß man einen formpreßfähigen, im wesentlichen ebenen Sternabschnitt (10) mit einem ersten formpreßfähigen Schlauchabschnitt (12) umgibt und den ersten Schlauchabschnitt mit einem zweiten formpreßfähigen Schlauchabschnitt (13) umgibt, wobei der genannte zweite Schlauchabschnitt im wesentlichen koaxial zum genannten ersten Schlauchabschnitt und axial in beiden Richtungen über den genannten ersten Schlauchabschnitt hinaus verläuft, und daß man im Anschluß daran den genannten Vorformling durch Formpressen herstellt.

2. Eine Methode gemäß Anspruch 1, wobei das Harz des genannten Sternabschnitts, des genannten ersten Schlauchabschnitts und des genannten zweiten Schlauchabschnitts jeweils im wesentlichen aus Vinylesterharz besteht.

3. Eine Methode gemäß Anspruch 1, wobei der genannte Stern abschnitt eine Plattenformmasse umfaßt.

4. Eine Methode gemäß Anspruch 1, 2 oder 3, wobei im wesentlichen alle genannten, unregelmäßig angeordneten Schnittfasern des genannten Sternabschnitts eine Länge zwischen 1,25 cm und 5 cm aufweisen.

5. Eine Methode gemäß Anspruch 1, wobei im wesentlichen alle genannten, unregelmäßig angeordneten Schnittfasern der genannten verstärkten Harzplatte eine Länge zwischen 1,25 cm und 5 cm aufweisen.

6. Eine Methode gemäß irgendeinem der vorstehenden Ansprüche, wobei die genannten Endlosfasern und die genannten, unregelmäßig angeordneten Schnittfasern in der genannten faserverstärkten Harzplatte in einem Gewichtsverhältnis von 1:1 bis 4:1 vorliegen.

7. Eine Methode gemäß irgendeinem der vorstehenden Ansprüche, wobei die Fasern des genannten Sternabschnitts Glasrovings umfassen.

8. Eine Methode gemäß irgendeinem der Ansprüche 1 bis 6, wobei das genannte, mit unregelmäßig angeordneten Schnittfasern verstärkte Harz des genannten Sternabschnitts 25 bis 55 Gewichtsprozent Glasrovings umfaßt.

9. Eine Methode gemäß irgendeinem der vorstehenden Ansprüche, wobei die Endlosfasern der genannten faserverstärkten Harzplatte Glasrovings umfassen.

10. Eine Methode gemäß irgendeinem der Ansprüche 1 bis 8, wobei die genannte faserverstärkte Harzplatte 55 bis 72 Gewichtsprozent Glasrovings umfaßt.

11. Eine Methode gemäß irgendeinem der vorstehenden Ansprüche, wobei die genannte faserverstärkte Harzplatte eines jeden der genannten ersten und zweiten Schlauchabschnitte abwechselnd Unterschichten aus faserverstärktem Harz umfaßt, wobei jeder eines ersten Satzes von einer oder mehr Unterschichten mit unregelmäßig angeordneten Schnittfasern verstärktes Harz und jeder eines zweiten Satzes von ein oder mehr Unterschichten mit Endlosfasern verstärktes Harz umfaßt.

12. Eine Methode gemäß Anspruch 11, wobei im wesentlichen alle unregelmäßig angeordneten Schnittfasern des genannten ersten Satzes der Unterschichten eine Länge zwischen 1,25 cm und 5 cm aufweisen.

13. Eine Methode gemäß den Ansprüchen 11 oder 12, wobei die Endlosfasern innerhalb einer Unterschicht einen ersten Satz von Endlosfasern umfassen, die im wesentlichen parallel zueinander verlaufen, und einen zweiten Satz von Endlosfasern umfassen, die im wesentlichen parallel zueinander verlaufen, wobei der genannte erste Satz von Fasern den genannten zweiten Satz von Fasern mit einem spitzen Winkel zwischen 10° und 50° kreuzt.

14. Eine Methode gemäß Anspruch 11, 12 oder 13, wobei die genannte faserverstärkte Harzplatte für den genannten ersten Schlauchabschnitt und die genannte faserverstärkte Harzplatte für den genannten zweiten Schlauchabschnitt im Vorformling so angeordnet sind, daß die Endlosfasern des ersten im wesentlichen senkrecht zu den Endlosfasern des zweiten verlaufen.

15. Eine Methode gemäß irgendeinem der vorstehenden Ansprüche, wobei der genannte Sternabschnitt von der Mitte des genannten ersten Schlauchabschnitts axial versetzt ist.

**Revendications**

1. Procédé pour mouler par compression à une température de 135°C à 165°C, à une pression de 4825 kPa à 10300 kPa, pendant un temps de 3 à 6 minutes, une roue de véhicule automobile en matière synthétique renforcée de fibres, qui comprend une partie voile (10) à peu près plane, composée d'une résine renforcée de fibres coupées au hasard et une partie jante ou section tubulaire (12, 13) faite d'une feuille de résine renforcée par des fibres contenant des fibres coupées au hasard et des fibres continues, la section tubulaire (12, 13) entourant la partie voile (10) autour d'un axe à peu près perpendiculaire au plan de la partie voile (10), caractérisé en ce que le procédé consiste à fabriquer tout d'abord une préforme moulable par compression d'une roue en matière synthétique, laquelle préforme est formée par des phases consistant à envelopper une partie voile (10) à peu près plane moulable par compression d'une première section tubulaire (12) moulable par compression et à envelopper la section tubulaire d'une seconde section tubulaire (13) moulable par compression, la seconde section tubulaire étant à peu près coaxiale à la première section tubulaire et se prolongeant axialement dans les deux sens au-delà de la première section tubulaire et, ensuite, à mouler par compression la préforme.

2. Procédé selon la revendication 1, dans lequel la résine de la partie voile, de la première section tubulaire et de la seconde section tubulaire est constituée essentiellement dans chaque cas pour une résine vinylester.

3. Procédé selon la revendication 1, dans laquelle la partie voile est constituée par un composé de moulage en feuille.

4. Procédé selon la revendication 1, 2 ou 3, dans lequel pratiquement la totalité des fibres coupées au hasard de la partie voile a une longueur de 1,25 cm à 5 cm.

5. Procédé selon la revendication 1, dans lequel pratiquement toutes les fibres couplées au hasard de la feuille de résine renforcée ont une longueur de 1,25 à 5 cm.

6. Procédé selon l'une quelconque des revendications précédentes, dans lequel les fibres continues et les fibres coupées au hasard sont présentes dans la feuille de résine renforcée par des fibres dans un rapport en poids de 1:1 à 4:1, respectivement.

7. Procédé selon l'une quelconque des revendications précédentes, dans lequel la fibre de la partie voile est composée de roving de verre.

8. Procédé selon l'une quelconque des revendications 1 à 6, dans lequel la résine renforcée par des fibres coupées de la partie voile comprend 25% à 55% en poids de roving de verre.

9. Procédé selon l'une quelconque des revendications précédentes, dans lequel les fibres continues de la feuille de résine renforcée de fibres sont composées de roving de verre.

10. Procédé selon une quelconque des revendications 1 à 8, dans lequel la feuille de résine renforcée de fibres comprend 55 à 72% en poids de roving de verre.

11. Procédé selon l'une quelconque des revendications précédentes, dans lequel la feuille de résine renforcée de fibre chacune des première et deuxième sections tubulaires comprend des sous-couches alternées de résine renforcée par des fibres alternées, où chacune des couches d'un premier ensemble d'une ou plusieurs sous-couches comprend de la résine renforcée de fibres coupées au hasard et chacune des sous-couches d'un deuxième ensemble d'une ou plusieurs sous-couches comprend de la résine renforcé par des fibres continues.

12. Procédé selon la revendication 11, dans lequel à peu près la totalité des fibres coupées au hasard du premier ensemble de sous-couches a une longueur comprise entre 1,25 et 5 cm.

13. Procédé selon la revendication 11 ou 12, dans lequel les fibres continues contenues dans une sous-couche comprennent un premier ensemble de fibres continues à peu près parallèles entre elles et un deuxième ensemble de fibres continues à peu près parallèles entre elles, le premier ensemble de fibres coupant le deuxième ensemble de fibres en formant un angle aigü de 10 à 50°.

14. Procédé selon la revendication 11, 12 ou 13, dans lequel la feuille renforcée de fibres utilisée dans la première section tubulaire et la feuille renforcée de fibres utilisée dans la seconde section tubulaire sont orientées dans la préforme de telle manière que les fibres continues de la première soient à peu près perpendiculaires aux fibres continues de la seconde.

15. Procédé selon l'une quelconque des revendications précédentes, dans lequel la partie voile est déportée axialement par rapport au centre de la première section tubulaire.

**0 083 244**

FIG.1

FIG.2

1

FIG.3

FIG.4

FIG.5

2 .